# FASCICULE DE BREVET EUROPEEN

(11) **EP 0 566 433 B1**
(45) Date de publication et mention de la délivrance du brevet: **04.10.1995**
(21) Numéro de dépôt: 93400600.8
(22) Date de dépôt: 09.03.1993
(51) Int. Cl.: G05D 23/02, G05D 23/13

(54) **Perfectionnements aux capsules thermostatiques et aux vannes mitigeuses munies de telles capsules**
Verbesserungen von thermostatischen Kappen und Mischungsventilen mit solchen Kappen
Improvements of thermostatic caps and of mixing valves fitted with such caps

(30) Priorité: 17.04.1992 FR 9204768
(43) Date de publication de la demande: 20.10.1993
(73) Titulaire: VERNET S.A., 91290 Arpajon Cédex (FR)
(72) Inventeur: Henault, Claude, F-78720 St Forget (FR); Chamot, Jean, F-91290 Arpajon (FR); Salvador, Daniel, F-91000 Evry (FR)
(74) Mandataire: Bernasconi, Jean

(56) Documents cités:
- DE-A- 2 804 755
- FR-A- 2 067 762
- GB-A- 2 120 752
- US-A- 3 765 604

## Description

Selon un premier aspect, l'invention est relative aux capsules thermostatiques, c'est-à-dire aux organes sensibles à la température qui sont composés d'un boîtier, d'un guide tubulaire dont une extrémité est sertie dans le boîtier de manière à pincer circonférentiellement contre celui-ci une membrane étanche et déformable, d'une matière dilatable telle qu'une cire maintenue à l'intérieur du boîtier par la membrane et d'un piston ou poussoir disposé à l'intérieur du guide tubulaire de façon à émerger par l'autre extrémité de celui-ci et agencé de façon à être sollicité vers la membrane, au moins lorsqu'il est monté sur un appareil utilisateur, l'ensemble étant tel que le piston puisse exécuter, par rapport à l'ensemble du boîtier et du guide tubulaire, un mouvement de translation dû à la dilatation et à la contraction de la matière dilatable sous l'effet des variations de température de celle-ci et un mouvement de rotation.

Une telle capsule thermostatique a été décrite dans le brevet des Etats-Unis n° 2.841.983. Dans cette capsule connue, le piston est agencé à la manière d'une vis et le guide tubulaire à la manière d'un écrou, si bien que les déplacements en translation du piston par rapport à l'ensemble du boîtier et du guide s'accompagnent obligatoirement de déplacements proportionnels en rotation du piston par rapport à cet ensemble. En d'autres termes, il y a une interdépendance totale entre l'altitude du piston, c'est-à-dire la hauteur dont celui-ci émerge du guide tubulaire, et la position angulaire de ce piston, par rapport à l'ensemble du boîtier et du guide, et la capsule n'est donc capable de transmettre à l'appareil utilisateur (vanne ou interrupteur, par exemple) qu'une commande d'un seul type, c'est-à-dire en fonction de la seule température.

L'invention a pour but d'agencer ces capsules de façon qu'elles puissent transmettre à l'appareil utilisateur des commandes de deux types différents et indépendants l'un de l'autre, sans augmenter sensiblement l'encombrement de la capsule et tout particulièrement son encombrement transversal.

A cet effet, la capsule thermostatique conforme à l'invention est essentiellement caractérisée en ce que le guide tubulaire et le boîtier sont munis extérieurement de portées respectives permettant de les solidariser en rotation avec deux éléments rotatifs différents de l'appareil utilisateur tout en autorisant un mouvement relatif en translation de l'ensemble du guide et du boîtier par rapport à ces deux éléments rotatifs.

De cette manière, les mouvements de translation du piston, par rapport à l'ensemble du boîtier et du guide tubulaire, qui sont indépendants de la position angulaire des éléments rotatifs de l'appareil, peuvent être utilisés pour transmettre un premier type de commande en fonction de la température tandis que la gamme opérationnelle de température de la capsule peut être ajustée par modification de la position longitudinale occupée par celle-ci pour une température donnée. Par ailleurs, les mouvements de rotation de l'ensemble du boîtier et du guide tubulaire peuvent être utilisés pour solidariser en rotation les deux susdits éléments rotatifs de l'appareil utilisateur, quelle que soit l'altitude du piston, c'est-à-dire quelles que soient la gamme opérationnelle de température de la capsule thermostatique et la température instantanée de sa matière dilatable. Enfin, l'attribution d'une fonction supplémentaire à la capsule thermostatique a l'avantage de se faire sans augmentation de l'encombrement transversal de celle-ci.

Selon un mode de réalisation de l'invention, les susdites portées ont chacune la forme d'une surface prismatique, voire d'une surface cylindrique autre que de révolution. Il peut être utile de rappeler à cet égard qu'une surface cylindrique est une surface engendrée par une droite (génératrice) qui se déplace parallèlement à une direction en s'appuyant sur une courbe plane fixe (directrice) dont le plan coupe la direction donnée et qu'une surface cylindrique de révolution n'est qu'un cas particulier des surfaces cylindriques, ce cas particulier étant expressément exclu du mode de réalisation susvisé.

La capsule étant destinée à transmettre des mouvements de rotation, une caractéristique avantageuse consiste dans le fait qu'au moins une surface du guide tubulaire et/ou du boîtier, en contact de sertissage avec l'autre de ces deux pièces, présente des moyens de blocage en rotation tels que des stries ou moyens analogues, destinés à renforcer le sertissage.

En outre, notamment pour les capsules destinées à être utilisées en milieu humide, on préfère que l'extrémité émergente du piston soit reliée au guide tubulaire par un moyen d'étanchéité.

Selon un deuxième aspect, l'invention est relative aux vannes mitigeuses comportant un élément de réglage de la température de l'eau sortant de la vanne, cet élément de réglage étant mobile en translation, un élément rotatif de réglage du débit de l'eau sortant de la vanne et un élément de commande rotatif et coulissant dont les mouvements de translation servent à ajuster la gamme fonctionnelle de température de la vanne et les mouvements de rotation à ajuster le débit de l'eau sortant de la vanne.

L'invention a pour but d'adapter à ces vannes mitigeuses une capsule thermostatique, sans augmenter le volume de ces vannes mitigeuses par rapport à des vannes mélangeuses de mêmes caractéristiques, mais à ajustement manuel de la température de sortie de l'eau.

A cet effet, la vanne mitigeuse conforme à l'invention est essentiellement caractérisée en ce qu'elle comporte une capsule thermostatique telle que définie ci-dessus ; en ce que l'élément de commande possède un logement recevant la portée du guide tubulaire, de façon telle que l'extrémité libre du piston soit poussée par un ressort contre le fond de ce logement et que le guide tubulaire puisse coulisser sans tourner à l'intérieur de ce logement ; en ce que l'élément de réglage de la température de l'eau est lié à la position axiale du boîtier de la capsule, et en ce que l'élément rotatif de réglage du débit de l'eau possède un logement recevant la portée du boîtier.

De cette façon, étant donné que le piston de la capsule prend appui sur le fond du logement de l'élément de commande, le boîtier de la capsule s'éloigne d'autant plus de ce fond que la température de l'eau est plus élevée et entraîne ainsi l'élément de réglage de la température dans le sens qui tend à abaisser celle-ci et vice versa. Si l'utilisateur veut diminuer (ou augmenter) la valeur à laquelle est fixée la température de sortie de l'eau, il provoque le déplacement en translation dans le sens voulu de l'élément de commande, donc de la capsule thermostatique, et par conséquent de l'élément de réglage de la température de l'eau. Dans un tel processus, la position angulaire de la capsule ne varie pas.

Si l'utilisateur veut diminuer ou augmenter le débit de l'eau qui sort du mélangeur, il provoque le déplacement en rotation dans le sens voulu de l'élément de commande, donc de la capsule thermostatique et par conséquent de l'élément de réglage rotatif du débit de l'eau. Dans un tel processus, la position longitudinale de l'extrémité mobile de la capsule ne varie pas.

Selon un mode de réalisation préféré, un ressort hélicoïdal agit sur l'élément de réglage du débit de l'eau et, par l'intermédiaire de cet élément de réglage, sur le boîtier de la capsule, dans le sens qui tend à maintenir le piston de la capsule contre le fond du logement de l'élément de commande rotatif et coulissant. Ce ressort unique remplit ainsi une double fonction, ce qui simplifie la construction de la vanne et diminue son encombrement.

De préférence encore, l'élément de commande rotatif et coulissant est actionné par deux bagues rotatives qui sont disposées à la suite l'une de l'autre à l'extérieur du corps de l'appareil et qui sont liées à l'élément de commande de façon, l'une, à faire tourner cet élément de commande en lui permettant de coulisser indépendamment et l'autre à déplacer cet élément de commande en translation en lui permettant de tourner indépendamment.

L'élément de commande est avantageusement monté de façon solidaire en translation mais libre en rotation dans une pièce qui fait la liaison entre la bague de réglage de la température de l'eau sortant de la vanne et ledit élément.

De préférence également, la bague de réglage du débit de l'eau sortant de la vanne est directement fixée à l'élément de commande.

L'invention va être maintenant exposée plus en détail à l'aide du dessin annexé, dans lequel :
- la figure 1 montre principalement une capsule thermostatique conforme à l'invention ; la moitié gauche est représentée en coupe longitudinale médiane tandis que la moitié droite est une vue extérieure avec arrachement partiel du boîtier;
- la figure 2 montre une vanne mitigeuse, en coupe longitudinale médiane, équipée de la capsule thermostatique de la figure 1, vue extérieurement ;
- les figures 3 et 4 montrent la vanne mitigeuse de la figure 2 montée sur un ensemble distributeur pour douche, en coupe suivant deux plans orthogonaux entre eux.

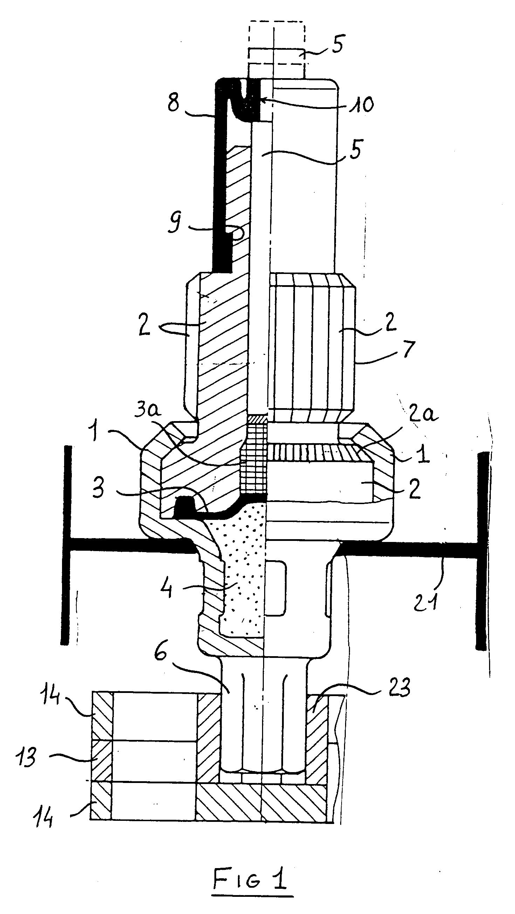

La capsule thermostatique représentée à la figure 1 comprend un boîtier ou corps central 1, un guide tubulaire 2 dont une extrémité est sertie dans le boîtier 1 de manière à pincer circonférentiellement contre celui-ci une membrane 3 étanche et déformable, une matière dilatable 4 telle qu'une cire, maintenue à l'intérieur du boîtier 1 par la membrane 3, et un piston ou poussoir 5 disposé à l'intérieur du guide tubulaire 2 de façon à émerger par l'autre extrémité de celui-ci. Un amplificateur de mouvement 3a classique peut être intercalé entre la membrane 3 et le piston 5.

Le piston 5 est agencé de manière à pouvoir exécuter, par rapport à l'ensemble du boîtier 1 et du guide tubulaire 2, un mouvement de translation dû à la dilatation et à la contraction de la matière dilatable 4 sous l'effet de variations de température de celle-ci. En outre, le piston 5 est libre de tourner axialement par rapport audit ensemble.

A son extrémité opposée au guide tubulaire 2, le boîtier 1 présente une portée 6 formée ici d'une surface prismatique à 6 pans, conçue pour une solidarisation uniquement en rotation avec un élément rotatif dont question plus loin. Bien entendu, toute forme appropriée peut être envisagée.

Le guide tubulaire 2 présente aussi, près du boîtier 1, une portée 7 ayant un rôle similaire à la précédente et formée préférentiellement d'une surface cannelée, par exemple à 16 dents, ou ayant toute autre forme appropriée.

Dans sa partie sertie dans le boîtier 1, le guide tubulaire 2 présente une surface inclinée 2a munie de stries destinées à accroître la sûreté du sertissage pour l'entraînement en rotation.

Pour ses utilisations en milieu humide, il est préférable, comme cela est représenté à la figure 1, de doter la capsule thermostatique d'une gaine souple d'étanchéité 8 s'étendant entre une gorge 9 du guide tubulaire 2 et une gorge 10 du piston 5. Cette gaine 8 est conçue de façon à ne pas s'opposer aux mouvements relatifs de translation du piston 5.

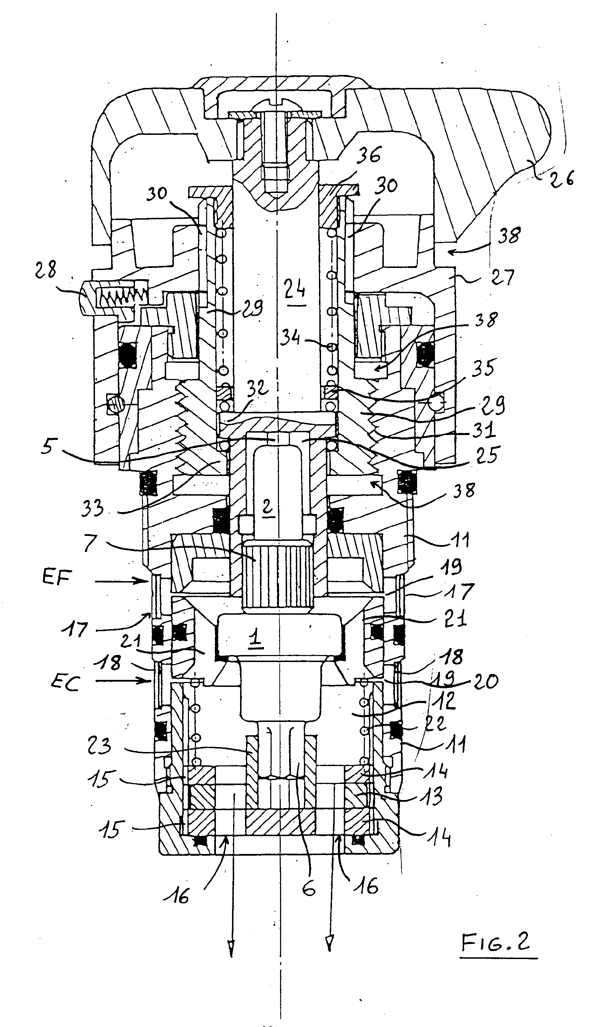

La vanne représentée à la figure 2 comprend un corps cylindrique 11 présentant une cavité de mélange 12 à la base de laquelle est disposé un ensemble obturateur rotatif et progressif formé de trois disques, de préférence en matière céramique Al₂O₃ comme il est d'usage, dont seul le disque central 13 est agencé de manière à pouvoir tourner. Les deux autres disques 14 sont immobilisés en rotation contre le corps 11 par des cannelures périphériques 15. Les disques 13 et 14 présentent un agencement d'ouvertures 16 permettant de faire varier le débit de sortie d'eau par rotation du disque central 13.

L'alimentation de la cavité de mélange 12 en eau froide EF et en eau chaude EC s'effectue par des ouvertures respectivement 17 et 18 dont le débouché dans ladite cavité est réduit à l'état de fentes respectivement 19 et 20 par un tiroir 21 dont le rôle est de faire varier les dimensions de ces fentes pour en ajuster le débit pour l'obtention d'une température de mélange donnée. Le tiroir 21 présente un débattement en translation de l'ordre du millimètre sous l'effet des forces élastiques contraires exercées d'une part par un ressort 22 en appui sur le disque 14 côté cavité de mélange et d'autre part par une capsule thermostatique telle que décrite en liaison avec la figure 1. Le tiroir 21 est sollicité par le ressort 22 contre le boîtier 1 de la capsule comme cela est représenté de façon schématique à la figure 1.

La capsule en place voit sa portée 6 placée de façon solidaire en rotation, mais libre en translation, dans une douille 23 ayant une surface intérieure complémentaire de celle de ladite portée 6 et destinée à transmettre toute rotation de la capsule au disque central 13 (voir aussi la figure 1).

Le repère numérique 24 désigne un élément de commande allongé présentant à une extrémité un logement 25 pour le guide tubulaire 2 de la capsule. Le logement 25 présente une partie conformée pour assurer une liaison en rotation avec la portée 7 du guide tubulaire 2 tout en préservant la liberté de translation de ces deux pièces l'une par rapport à l'autre. Lorsque la capsule est en place, l'extrémité émergente du piston 5 vient en appui élastique permanent contre le fond de ce logement 25 sous l'action dudit ressort 22.

L'autre extrémité de l'élément de commande 24 est fixée à un bague rotative extérieure 26 destinée à faire tourner ledit élément et, par l'intermédiaire des portées 6 et 7 de la capsule, le disque central 13 entre une position de fermeture et une position d'ouverture maximum de la sortie d'eau. Entre ces deux positions, la rotation de l'ensemble peut être par exemple de l'ordre du quart de tour.

La vanne comprend une deuxième bague rotative extérieure 27, graduée, pour le réglage de la température de l'eau sortant de la vanne, combinée de préférence à un bouton de calage 28 qui détermine une température standard dite de confort, par exemple 38°C. Pour s'écarter de cette température, l'utilisateur doit actionner ce bouton pour libérer la bague 27, puis tourner celle-ci jusqu'au repère de température désiré.

La bague 27 est reliée à une pièce 29, placée autour de l'élément de commande 24, par une liaison 30 à rainures, solidarisant en rotation la bague 27 et la pièce 29 tout en laissant celle-ci libre en translation. Cette pièce 29 est elle-même reliée au corps cylindrique 11 de la vanne par un filetage 31 provoquant le déplacement en translation de la pièce 29 lorsqu'est tournée la bague 27.

L'élément de commande 24 s'étend à l'intérieur de la pièce 29 et présente un épaulement 32 en regard d'un rebord intérieur 33 de la pièce 29. L'épaulement 32 est maintenu au voisinage de ce rebord 33 par une extrémité d'un ressort 34 qui est séparée du reste du ressort par une butée à billes libre 35 sur laquelle s'exerce en partie la pression du ressort. L'autre extrémité du ressort 34 est en appui sur une butée annulaire 36 vissée à l'extrémité de la pièce 29 et dans laquelle coulisse l'élément de commande 24.

Le ressort 34, qui constitue un ressort dit de surcourse destiné à prendre en compte des surchauffes dans la cavité de mélange 12, possède une puissance assurant la solidarisation en translation de la pièce 29 et de l'élément de commande 24 et notamment supérieure à celle du ressort 22, par exemple d'un facteur 2.

Cet agencement permet par conséquent, lors de la rotation de la bague 27 de réglage de température, d'entraîner en translation l'élément de commande 24, par l'intermédiaire de la pièce 29. Pendant cette opération, l'élément de commande 24 est libre de tourner sous l'action de la bague 26 de réglage du débit. A la figure 2, on est à mi-course comme on le voit à l'état des espaces de débattement 38.

En cas de dépassement d'un certain seuil de température, ce qu'on a appelé surchauffe plus haut, on assiste, après fermeture de l'admission d'eau chaude, à un déplacement, sous l'action du piston 5, de l'ensemble élément de commande 24 - bague 26 - butée à billes 25 contre l'action du ressort 34. En fin de surchauffe l'ensemble revient en place sous l'action dudit ressort 34.

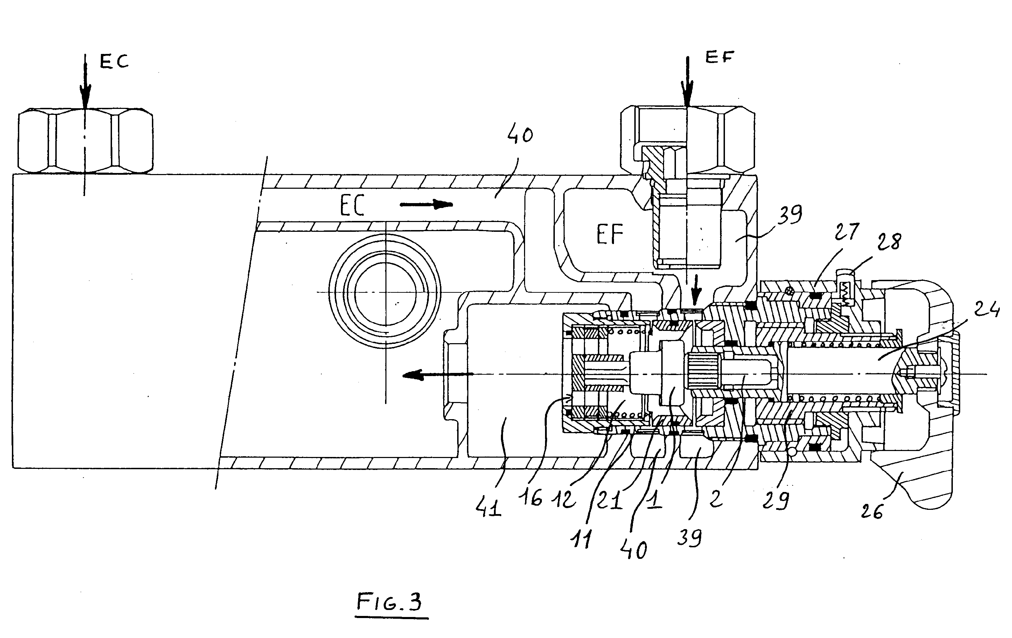

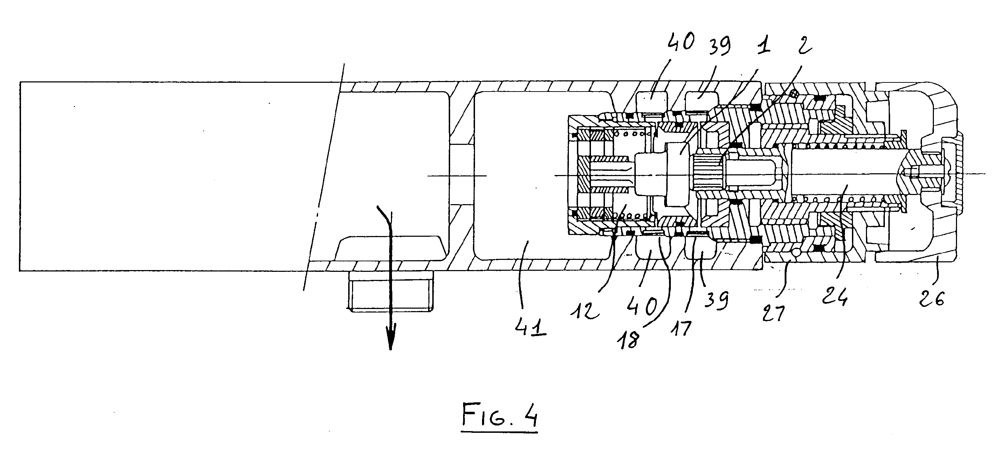

On se réfère maintenant aux figures 3 et 4 montrant la vanne décrite ci-dessus, montée dans un distributeur de douche. La vanne est ici montée horizontalement, tandis que, dans le cas d'un distributeur pour lavabo ou évier, un montage vertical peut être préférable.

On voit que la cavité de mélange 12 est alimentée en eau froide EF par le canal 39 et en eau chaude EC par le canal 40, tandis que l'eau sortant de la vanne s'écoule dans le canal de sortie 41.

Bien entendu, tant à l'intérieur de la vanne mitigeuse qu'à son extérieur, il est prévu des joints usuels, notamment toriques, entre les pièces en mouvement et entre la vanne et le reste de l'installation, comme représenté sur le dessin.

Pour en venir au fonctionnement de la vanne mitigeuse ainsi décrite, on comprend que, le piston 5 de la capsule étant en appui sur le fond du logement 25 de l'élément de commande 24, l'ensemble formé par le boîtier 1 et le guide tubulaire 2 s'éloigne d'autant plus de ce fond que la température de l'eau est plus élevée et entraîne ainsi le tiroir 21 dans le sens qui tend à ouvrir davantage l'admission d'eau froide et à diminuer celle de l'eau chaude, et vice versa.

Si l'utilisateur souhaite diminuer ou augmenter la valeur à laquelle est fixée la température de sortie de l'eau, il lui suffit de tourner la bague 27 (après actionnement du bouton de calage 28 si l'on part de la valeur de température standard) pour provoquer le déplacement en translation dans le sens voulu de l'élément de commande 24, et par conséquent de la capsule et partant du tiroir 21.

Pendant toutes ces opérations, la position angulaire de la capsule ne varie pas.

Si l'utilisateur veut diminuer ou augmenter le débit de l'eau qui sort du mélangeur, il lui suffit de tourner la bague 26 pour provoquer le déplacement en rotation dans le sens voulu de l'élément de commande 24, donc de la capsule par l'intermédiaire de la portée 7, donc du disque central 13 par le biais de la portée 6 et de la douille 23. Au cours de cette opération, la position longitudinale de la capsule ne varie pas.

De façon usuelle, les caractéristiques de la capsule seront choisies de façon à se placer, pour la température standard de confort, dans la partie la plus pentue de la courbe de dilatation de la capsule thermostatique.

Si l'application de la capsule thermostatique selon l'invention a été décrite dans le cadre d'une vanne mitigeuse, il va de soi qu'elle peut être utilisée de façon générale dans toute application thermostatique nécessitant deux types de commande.

## Revendications

1. Capsule thermostatique comprenant un boîtier (1), un guide tubulaire (2) dont une extrémité est sertie dans le boîtier (1) de manière à pincer circonférentiellement contre celui-ci une membrane (3) étanche et déformable, une matière dilatable (4) telle qu'une cire maintenue à l'intérieur du boîtier (1) par la membrane (3) et un piston ou poussoir (5) disposé à l'intérieur du guide tubulaire (2) de façon à émerger par l'autre extrémité de celui-ci et agencé de façon à être sollicité vers la membrane (3), au moins lorsqu'il est monté sur un appareil utilisateur, l'ensemble étant tel que le piston (5) puisse exécuter, par rapport à l'ensemble du boîtier (1) et du guide tubulaire (2), un mouvement de translation dû à la dilatation et à la contraction de la matière dilatable (4) sous l'effet des variations de température de celle-ci et un mouvement de rotation,
caractérisée en ce que le guide tubulaire (2) et le boîtier (1) sont munis extérieurement de portées respectives (7, 6) permettant de les solidariser en rotation avec deux éléments rotatifs différents (24, 13) de l'appareil utilisateur tout en autorisant un mouvement relatif en translation de l'ensemble du guide tubulaire (2) et du boîtier (1) par rapport à ces deux éléments rotatifs (24, 13).

2. Capsule thermostatique selon la revendication 1, caractérisée en ce que lesdites portées (6, 7) ont chacune la forme d'une surface prismatique ou d'une surface cylindrique autre que de révolution.

3. Capsule thermostatique selon la revendication 1 ou 2, caractérisée en ce qu'au moins une surface (2a), du guide tubulaire (2) et/ou du boîtier (1), en contact de sertissage avec l'autre de ces deux pièces, présente des moyens de blocage en rotation.

4. Capsule thermostatique selon l'une quelconque des revendications 1 à 3, caractérisée en ce que l'extrémité émergente du piston (5) est reliée au guide tubulaire (2) par un moyen d'étanchéité (8).

5. Vanne mitigeuse comportant un élément de réglage de la température de l'eau sortant de la vanne, cet élément de réglage étant mobile en translation, un élément rotatif de réglage du débit de l'eau sortant de la vanne et un élément de commande rotatif et coulissant dont les mouvements de translation servent à ajuster la gamme fonctionnelle de température de la vanne et les mouvements de rotation à ajuster le débit de l'eau sortant de la vanne,
caractérisée en ce qu'elle comporte une capsule thermostatique selon l'une quelconque des revendications 1 à 4 ; en ce que l'élément de commande (24) possède un logement (25) recevant la portée (7) du guide tubulaire (2), de façon telle que l'extrémité libre du piston (5) soit poussée par un ressort (22) contre le fond de ce logement (25) et que le guide tubulaire (2) puisse coulisser sans tourner à l'intérieur de ce logement (25) ; en ce que l'élément de réglage (21) de la température de l'eau est lié à la position axiale du boîtier (1) de la capsule, et en ce que l'élément rotatif de réglage (13) du débit de l'eau possède un logement (23) recevant la portée (6) du boîtier (1).

6. Vanne mitigeuse selon la revendication 5, caractérisée en ce qu'elle comprend un ressort hélicoïdal (22) qui agit sur l'élément de réglage (21) du débit de l'eau et, par l'intermédiaire de cet élément de réglage (21), sur le boîtier (1) de la capsule, dans le sens qui tend à maintenir le piston (5) de la capsule contre le fond du logement (25) de l'élément de commande (24) rotatif et coulissant.

7. Vanne mitigeuse selon la revendication 5 ou 6, caractérisée en ce que l'élément de commande (24) rotatif et coulissant est actionné par deux bagues rotatives (26, 27) qui sont disposées à la suite l'une de l'autre à l'extérieur du corps (11) de l'appareil et qui sont liées à l'élément de commande (24) de façon, l'une (26), à faire tourner cet élément de commande en lui permettant de coulisser indépendamment et l'autre (27) à déplacer cet élément de commande en translation en lui permettant de tourner indépendamment.

8. Vanne mitigeuse selon la revendication 7, caractérisée en ce que l'élément de commande (24) est monté de façon solidaire en translation mais libre en rotation dans une pièce (29) qui fait la liaison entre la bague (27) de réglage de la température de l'eau sortant de la vanne et ledit élément.

9. Vanne mitigeuse selon la revendication 7 ou 8, caractérisée en ce que la bague (26) de réglage du débit de l'eau sortant de la vanne est directement fixée à l'élément de commande (24).

## Patentansprüche

1. Thermostatkapsel umfassend ein Gehäuse (1), eine rohrförmige Führung (2), deren eines Ende in dem Gehäuse (1) derart gebördelt ist, daß es umfangsmäßig eine dichte und verformbare Membran (3) gegen dieses drückt, ein ausdehnbares Material (4), wie ein Wachs, das im Inneren des Gehäuses (1) durch die Membran (3) gehalten ist, und einen Kolben oder Stössel (5), der im Inneren der rohrförmigen Führung (2) derart angeordnet ist, daß er mit dem anderen Ende aus dieser austritt und derart ausgebildet ist, daß er zu der Membran (3) belastet ist, zumindest, wenn er an einer Benutzervorrichtung angebracht ist, wobei die Gesamtheit derart ist, daß der Kolben (5) in bezug auf die Einheit aus Gehäuse (1) und rohrförmiger Führung (2) eine Verschiebungsbewegung aufgrund der Ausdehnung und des Zusammenziehens des ausdehnbaren Materials (4) unter der Wirkung von dessen Temperaturänderungen und eine Drehbewegung ausüben kann,
**dadurch gekennzeichnet**, daß die rohrförmige Führung (2) und das Gehäuse (1) außen mit entsprechenden Anlageflächen (7, 6) versehen sind, die ermöglichen, sie mit zwei unterschiedlichen Drehelementen (24, 13) der Benutzervorrichtung drehfest zu verbinden, wobei aber eine relative Verschiebungsbewegung der Einheit aus rohrförmiger Führung (2) und Gehäuse (1) in bezug auf diese zwei drehbaren Elemente (24, 13) ermöglicht wird.

2. Thermostatkapsel gemäß Anspruch 1, **dadurch gekennzeichnet**, daß die genannten Anlageflächen (6, 7) jeweils die Form einer prismatischen Oberfläche oder eine von einer Umdrehungsfläche unterschiedlichen Zylinderfläche aufweist.

3. Thermostatkapsel gemäß Anspruch 1 oder 2, **dadurch gekennzeichnet**, daß mindestens eine Oberfläche (2a) der rohrförmigen Führung (2) und/oder des Gehäuses (1), die mit der anderen der zwei Teile in Bördelungsverbindungsberührung steht, Mittel zur Drehblockierung aufweist.

4. Thermostatkapsel gemäß irgendeinem der Ansprüche 1 bis 3, **dadurch gekennzeichnet**, daß das heraustretende Ende des Kolbens (5) durch eine Abdichtungseinrichtung (8) mit der rohrförmigen Führung (2) verbunden ist.

5. Mischschieber umfassend ein Einstellelement für die Temperatur des aus dem Schieber austretenden Wassers, wobei dieses Einstellelement verschiebebeweglich ist, ein Drehelement zum Einstellen der Ausströmmenge des aus dem Schieber austretenden Wassers und ein drehbares und verschiebbares Steuerelement, dessen Verschiebungsbewegungen dazu dienen, den Arbeitsbereich der Temperatur des Schiebers einzustellen und dessen Drehbewegungen dazu dienen, die Ausströmmenge des aus dem Schieber austretenden Wassers einzustellen,
**dadurch gekennzeichnet**, daß er eine Thermostatkapsel gemäß irgendeinem der Ansprüche 1 bis 4 umfaßt, daß das Steuerelement (24) eine Aufnahme (25) besitzt, die die Anlagefläche (7) der rohrförmigen Führung (2) derart aufnimmt, daß das freie Ende des Kolbens (5) durch eine Feder (22) gegen den Boden dieser Aufnahme (25) gedrückt wird, und daß sich die rohrförmige Führung (2) ohne im Inneren dieser Aufnahme (25) zu drehen, verschieben kann, daß das Einstellelement (21) für die Temperatur des Wassers mit der axialen Position des Gehäuses (1) der Kapsel verbunden ist, und daß das drehbare Einstellelement (13) für die Ausströmmenge des Wassers eine Aufnahme (23) besitzt, die die Anlagefläche (6) des Gehäuses (1) empfängt.

6. Mischschieber gemäß Anspruch 5, **dadurch gekennzeichnet**, daß es eine Schraubenfeder (22) umfaßt, die auf das Einstellelement (21) für die Ausströmmenge des Wassers und mittels dieses Einstellelements (21) auf das Gehäuse (1) der Kapsel in der Richtung wirkt, die dazu neigt, den Kolben (5) der Kapsel gegen den Boden der Aufnahme (25) des drehbaren und verschiebbaren Einstellelements (24) aufrechtzuerhalten.

7. Mischschieber gemäß Anspruch 5 oder 6, **dadurch gekennzeichnet**, daß das drehbare und verschiebbare Steuerelement (24) durch zwei Drehringe (26, 27) betätigt wird, die aufeinanderfolgend auf dem Äußeren des Körpers (11) der Vorrichtung angeordnet sind und die mit dem Steuerelement (24) derart verbunden sind, daß einer (26) dieses Steuerelement drehen kann, wobei ihm gestattet wird, sich unabhängig zu verschieben, und der andere (27) dieses Steuerelement verschiebungsmäßig bewegen kann, wobei ihm gestattet wird, sich unabhängig zu drehen.

8. Mischschieber gemäß Anspruch 7, **dadurch gekennzeichnet**, daß das Steuerelement (24) verschiebeeinheitlich aber drehfrei mit einem Teil (29) verbunden ist, das die Verbindung zwischen dem Ring (27) zum Einstellen der Temperatur des aus dem Schieber austretenden Wassers und dem genannten Element herstellt.

9. Mischschieber gemäß Anspruch 7 oder 8, **dadurch gekennzeichnet**, daß der Ring (26) zum Einstellen der Ausströmmenge des aus dem Schieber austretenden Wassers unmittelbar an dem Steuerelement (24) befestigt ist.

## Claims

1. A thermostatic capusle element comprising a casing (1), a tubular guide (2) of which one end is set in the casing (1) in such a way as to grip circumferentially against this latter a sealing-tight and deformable diaphragm (3), an expansible material (4) such as a wax maintained inside the casing (1) by the diaphragm (3) and a piston or push-rod (5) disposed inside the tubular guide (2) in such a way as to emerge from the other end thereof and adapted to be urged towards the diaphragm (3), at least when it is mounted on a consumer appliance, the whole being such that the piston (5) is able to execute, in relation to the assembly comprising the casing (1) and the tubular guide (2), a translatory movement due to the expansion and contraction of the expansible material (4) under the effect of fluctuations in the temperature of this latter and a rotary movement, characterised in that the tubular guide (2) and the casing (1) are on the outside provided with respective bearing surfaces (7, 6) by which they can be rendered rotationally rigid with two different rotating elements (24, 13) of the user appliance while allowing a relative translatory movement of the assembly comprising the tubular guide (2) and the casing (1) in relation to these two rotary elements (24, 13).

2. A thermostatic capsule element according to claim 1, characterised in that the said bearing surfaces (6, 7) each have the form of a prismatic surface or cylindrical surface other than one of revolution.

3. A thermostatic capsule element according to claim 1 or 2, characterised in that at least one surface (2a) of the tubular guide (2) and/or of the casing (1) in crimping or setting contact with the other of these two parts comprises means of locking it in rotation.

4. A thermostatic capsule element according to any one of claims 1 to 3, characterised in that the emerging end of the piston (5) is connected to the tubular guide (2) by a sealing-tight means (8).

5. A mixing valve comprising an element for regulating the temperature of the water emerging from the valve, this regulating element being adapted for a translatory movement, a rotary element for regulating the flow of water emerging from the valve and a rotary and sliding control element the translatory movements of which serve to adjust the functional range of temperature of the valve and the rotary movements for adjusting the rate of flow of water emerging from the valve, characterised in that it comprises a thermostatic capsule element according to any one of claims 1 to 4 in that the control element (24) has a housing (25) receiving the bearing surface (7) of the tubular guide (2) in such a way that the free end of the piston (5) is pushed back by a spring (22) against the bottom of this housing (25) and so that the tubular guide (2) is able to slide inside this housing (25) without turning; in that the element (21) for regulating the water temperature is connected to the axial position of the casing (1) of the capsule element and in that the rotary element (13) for regulating the rate of flow of water comprises a housing (23) which receives the bearing surface (6) of the casing (1).

6. A mixer valve according to claim 5, characterised in that it comprises a helical spring (22) which acts on the element (21) for regulating the rate of flow of water and, via this regulating element (21), on the casing ( 1) of the capsule element, in the direction which seeks to maintain the piston (5) of the capsule element against the bottom of the housing (25) of the rotary and sliding control element (24).

7. A mixer valve according to claim 5 or 6, characterised in that the rotary and sliding control element (24) is actuated by two rotary rings (26, 27) which are disposed one after the other outside the body (11) of the apparatus and which are linked to the control element (24) so that one of them (26) is able to cause this control element to turn, allowing it to slide independently and the other (27) to displace this control element with a translatory movement, allowing it to turn independently.

8. A mixer valve according to claim 7, characterised in that the control element (24) is mounted in such a way as to be rigid in the translatory sense but free to rotate in a part (29) which constitutes a connection between the ring (27) for regulating the temperature of the water emerging from the valve and the said element.

9. A mixer valve according to claim 7 or 8, characterised in that the ring (26) for regulating the rate of flow of water emerging from the valve is directly fixed to the control element (24).
